# EUROPEAN PATENT APPLICATION

(11) **EP 2 853 321 A1**
(43) Date of publication of application: **01.04.2015**
(21) Application number: 13793345.3
(22) Date of filing: 17.05.2013
(51) Int. Cl.: B22D 19/14

(54) **MANUFACTURING METHOD FOR MOLDED RESIN PRODUCT WITH METAL INSERT**

(30) Priority: 21.05.2012 JP 2012115641
(71) Applicant: Teijin Limited, Osaka-shi, Osaka 541-0054 (JP)
(72) Inventor: KANEKO, Toru, Gotemba-shi Shizuoka 412-0048 (JP); OKAMOTO, Hiyoshi, Gotemba-shi Shizuoka 412-0048 (JP)
(74) Representative: Carpmaels & Ransford LLP
(86) International application number: PCT/JP2013/063825
(87) International publication number: WO 2013/176059

(57) **Abstract**

A manufacturing method for a resin shaped product including casted metal, the method including laying a composite constituted by inorganic fibers and a thermoplastic resin in a mold for molding, and injecting a metal in a molten state into the mold to integrate the metal with the composite. Furthermore, it is preferred that the inorganic fibers are carbon fibers. It is further preferred that the metal is an aluminum alloy or a magnesium alloy, and it is preferred that the content of fibers based on the composite is from 10 to 70 wt%, a thickness of the portion of the composite to be contact with the metal is 25 mm or less, a through-hole or a groove is previously present in the composite, and the metal has a shape of a rib or a boss. A manufacturing method for a resin shaped product including casted metal free of strain and defects in a joining portion is provided by the present invention.

## Description

### Technical Field

The present invention relates to a manufacturing method for a resin shaped product including casted metal in which a fiber-reinforced resin material and a metal are integrated.

### Background Art

At present, a fiber-reinforced resin material that is reinforced with reinforcing fibers has been widely used in various fields, but in a portion repeatedly used, such as a boss or a tapping screw, a metal generally has high durability as compared with a resin. Furthermore, it is known that a complicated shape such as a thin-walled rib or a small-sized boss is easily manufactured by a metal material or the like as compared with a fiber-reinforced resin material. For example, in injection molding, in the case of mixing fibers for reinforcement with a resin, a melt viscosity of a fiber-containing resin to be injected is increased, and it has been difficult to obtain a complicated shape.

Accordingly, a shaped product in which a fiber-reinforced resin material and a metal part are integrated is sometimes used. As a method for integrating such metal part and resin, a method of conducting mechanical fastening or joining using an adhesive is generally employed. However, those methods have the limitation in product design. Furthermore, to secure strength or the like, attachment of an auxiliary part is required. For this reason, there has been a problem in processing time and costs.

On the other hand, a method of previously inserting a metal part in a mold and then injection molding a resin is known. This method is a method in which a metal part constitutes a portion requiring strength and high accuracy, and other remaining portions are surrounded with a resin, and thereby the metal is held with the resin and joined with the resin. To strongly integrate the metal part and the resin, joining force is maintained by utilizing shrinkage stress of the resin injection molded. However, there has been a problem that adhesive force is still insufficient.

Patent Document 1 discloses a method of subjecting a metal part to a surface treatment, and thereby enhancing affinity in a joining portion between a metal and a resin. However, even though the surface treatment is applied to a metal portion, strain is easy to be generated on a joining surface, and there have been problems such that the whole shaped product or a metal part is distorted, and peeling and cracks are generated in the joining portion. Furthermore, a resin containing fibers has high viscosity, and injection molding is difficult to perform. Thus, a shaped product in which a fiber-reinforced resin and a metal part are integrated has not been able to be obtained by this method.
Patent Document 1: JP-A-2001-225352

### Disclosure of Invention

### Problems that Invention is to Solve

An object of the present invention is to provide a manufacturing method for a resin shaped product including casted metal free of strain and a defect in a joining portion.

### Means for Solving the Problems

The manufacturing method for a resin shaped product including casted metal of the present invention is characterized by including laying a composite constituted by inorganic fibers and a thermoplastic resin in a mold for molding, and injecting a metal in a molten state into the mold to integrate the metal with the composite.

Furthermore, it is preferred that the inorganic fibers are carbon fibers. It is further preferred that the metal is an aluminum alloy or a magnesium alloy, and it is preferred that the content of fibers in the composite is from 10 to 70 wt%, a thickness of the portion being in contact with the metal of the composite is 25 mm or less, a through-hole or a groove is previously present in the composite, and the metal has a shape of a rib or a boss.

The resin shaped product including casted metal that is another invention in the present invention is a product obtained by those manufacturing methods.

### Advantageous Effects of Invention

According to the present invention, a manufacturing method for a resin shaped product including casted metal free of strain and defects in a joining portion is provided.

### Brief Description of Drawings

FIG. 1 shows a resin shaped product including casted metal having a rib-shaped metal portion.
FIG. 2 shows a resin shaped product including casted metal having a boss-shaped metal portion.
FIG. 3 shows a composite in which a through-hole is previously present.
FIG. 4 is a cross-sectional view of a resin shaped product including casted metal having a boss-shaped metal portion.
FIG. 5 shows a composite in which a groove is previously present on an outer frame.
FIG. 6 shows a resin shaped product including casted metal in which a metal is present along a groove.

### Description of Reference Numerals and Signs

1 Fiber-reinforced resin (composite)
2 Aluminum alloy

### Description of Embodiments

The manufacturing method for a resin shaped product including casted metal of the present invention is a manufacturing method including laying a composite (fiber-reinforced resin) constituted by inorganic fibers and a thermoplastic resin in a mold for molding, and injecting a metal in a molten state into the mold to integrate the metal with the composite.

The composite constituted by inorganic fibers and a thermoplastic resin, used in the present invention is generally called as a fiber-reinforced resin composite, and can be generally obtained by, for example, impregnating a base material of reinforcing fibers with a thermoplastic resin.

The inorganic fibers used in the composite are heat-resistant fibers that are hardly damaged by heat and are fibers used for the reinforcement of a resin. More specifically, examples of the inorganic fibers include carbon fibers, glass fibers, alumina fibers, boron fibers, basalt fibers and metal fibers. To form a composite having high strength and rigidity, it is preferred that the inorganic fibers are carbon fibers. As the kind of fibers used, the fibers may be used in one kind or by combining two kinds or more.

The inorganic fibers used in the present invention have a role of fiber reinforcement and additionally a role of releasing heat in a manufacturing process, and from this standpoint, it is preferred that thermal conductivity of the inorganic fibers is higher than that of a resin. Generally, addition of fibrous material having high thermal conductivity in a one-dimensional direction increases thermal conductivity of the whole composite. Higher thermal conductivity can be obtained by selecting a material of fibers. Specifically, it is preferred that the fibers are high thermal conductive fibers such as carbon fibers, boron fibers and metal fibers. Numerically, the thermal conductivity in a length direction of fibers is preferably 1W/m·K or more, more preferably 5W/m·K or more, and particularly preferably 10W/m·K or more. The upper limit is not particularly limited, but the upper limit is generally about 900W/m·K. From the standpoint of the thermal conductivity, carbon fibers are preferred as the fibers, and general pitch-based carbon fibers and PAN-based carbon fibers can be used.

It is preferred that the average diameter of the fibers used in the composite is a range of from 4 to 9 µm. To reinforce the resin, it is preferred that the fibers have high strength, and it is preferred that tensile strength of the fibers is from 3,500 to 7,000 MPa, and modulus is from 220 to 900 GPa. In that sense, from the standpoint that high strength shaped product can be obtained, carbon fibers are preferred as the fibers, and PAN-based carbon fibers are more preferred as the fibers. For the purpose of preventing generation of warpage in the composite material and from the standpoint of obtaining a shaped product having good dimensional accuracy, it is preferred that a coefficient of thermal expansion of the fibers is small.

As a form of the fibers in the composite (fiber-reinforced resin) containing those fibers, the fibers may be used in the form of long fibers (continuous fibers) or short fibers (discontinuous fibers). It is preferred that the fibers have a long fiber shape from the standpoint of reinforcement of a resin and that the fibers have a short fiber shape from the standpoint that anisotropy of thermal conduction and the like is not generated. In the case where the fibers are short fibers, generally a non-woven fabric is previously formed, or the composite can be molded using pellets constituted by a thermoplastic resin and the fibers. In the case that the fibers are long fibers, the long fibers can be used as a one-dimensional sheet or in various forms such as a woven fabric, a knitted fabric and a braid. Furthermore, those forms of the fibers can be used in one kind or as a combination of two kinds or more.

Examples of weave texture in the case of using as a woven fabric include a plain fabric, a satin weave, a twill weave and a multiaxial woven fabric. In the case where the fibers are a plain fabric, a satin weave and a twill weave, a woven fabric obtained by weaving such that a weaving density is from 6 to 15 fibers/25 mm in a warp direction and from 6 to 15 fibers/25 mm in a weft direction, using fiber bundles of 200 to 800 tex as a warp yarn and a weft yarn is preferred.

Particularly, a woven fabric obtained by forming a bundle of general fiber-reinforcing materials arranged in one direction into a sheet shape, stacking those sheets by varying an angle (a base material of a multiaxial woven fabric), penetrating a stitching sheet such as a nylon yarn, a polyester yarn or a glass fiber yarn through the stacked body in a thickness direction thereof, and reciprocating between a front surface and a back surface of the stacked body in a surface direction to stitch the stacked material can be used as the multiaxial woven fabric. In the case of the multiaxial woven fabric, one obtained by weaving such that a fiber weight between the respective layers is from 50 to 300 g/m², using a fiber bundle of from 400 to 2,000 tex is preferred.

Examples of the multiaxial woven fabric include multiaxial woven fabrics having angles of [+45/-45], [-45/+45], [0/90], [0/+45/-45], [0/-45/+45], [0/+45/90/-45] and the like. The expression "0, ±45 and 90" means a stacking angle of each layer constituting a multiaxial woven fabric, and indicates that a fiber axis direction of reinforcing fibers arranged in one direction is 0°, ±45° and 90° to a length direction of a woven fabric, respectively. The stacking angle is not limited to those angles, and can be optional angle.

On the other hand, in the case where the fibers used have a short fiber shape, it is preferred that the length is from 2 to 100 mm. In the case where the fibers are used in the form of a sheet-shaped material of a non-woven fabric, it is preferred that the fabric is a mat-shaped material constituted by fibers having an average fiber length of from 10 mm to 100 mm. Furthermore, it is preferred that the fabric has the form of a random mat in which fibers substantially orient two-dimensionally random. This arrangement facilitates molding, and strength reinforcement by fibers is exhibited further efficiently. For example, it is possible that a fiber-resin composite which was once shaped into a plate shape is molded in a mold using heat and pressure, and simultaneously a metal in a molten state is injection molded, and thereby obtaining a complicated resin shaped product in which a metal is insert-molded at one time. The composite of a fiber-reinforced resin constituted by inorganic fibers and a thermoplastic resin, used in the present invention is constituted by the above-described fibers and thermoplastic resin. The thermoplastic resin used in the present invention returns to the original properties by cooling even though temporarily melted by heat. As a result, high properties can be maintained as a composite even before and after metal insert processing. For example, in the case of having a melting point as in a crystalline resin, it is preferred that a melting point of the resin is from 150°C to 300°C. It is further preferred to be a high melting point resin of from 220°C to 300°C and particularly 260°C or higher. In the present invention, even a resin that does not have a melting point can be used so long as it is a resin that maintains a shape when being in contact with a metal injected. For example, a non-crystalline resin and a liquid crystal resin, in which a clear melting point is not present, are also preferably used. Deflection temperature under load of a resin single body is preferably 30°C or higher, and more preferably a range of from 60 to 350°C. The deflection temperature under load used herein means a temperature obtained by measuring a sample having a thickness of 4 mm under a load applied of 1.8 MPa according to ISO 75. Decomposition temperature is preferably a range of from 300°C to 500°C. In the manufacturing method of the present invention, because the composite contains fibers having thermal conductivity higher than that of the resin, it is possible to obtain a resin shaped product including casted metal having excellent adhesiveness and less strain even though, for example, a polyamide resin having relatively low melting point is used.

Examples of the kind of more specific thermoplastic resin include vinyl chloride resin, vinylidene chloride resin, vinyl acetate resin, polyvinyl alcohol resin, polystyrene resin, acrylonitrile-styrene resin (AS resin), acrylonitrile-butadiene-styrene resin (ABS resin), acrylic resin, methacrylic resin, polyethylene resin, polypropylene resin, polyamide resin, polyacetal resin, polycarbonate resin (PC resin), polyethylene terephthalate resin, polyethylene naphthalate resin, polybutylene terephthalate resin (PBT resin), polybutylene naphthalate resin, polyacrylate resin, polyphenylene ether resin, polyphenylene sulfide resin (PPS resin), polysulfone resin, polyether sulfone resin, polyether imide resin (PEI resin), polyether ether ketone resin, and polyacetic resin. Above all, polycarbonate resin (PC resin), polyethylene terephthalate resin, polyethylene naphthalate resin, polybutylene terephthalate resin (PBT resin), polyphenylene sulfide resin (PPS resin), polyamide resin and the like are preferably used. Those thermoplastic resins may be a simple body and may be a blend of two kinds or more, and a polymer alloy constituted by two kinds or more may be used.

Particularly, a heat-resistant resin that is difficult to be deteriorated even when being in contact with a metal in a molten state of high temperature during molding is preferred, and for example, polyphenylene sulfide resin (PPS resin), polyether imide resin (PEI resin), polyether ether ketone resin (PEEK resin), polysulfone (PSF) resin, polyether sulfone resin and a polyamide imide resin can be preferably used.

From physical property and working property of a shaped product obtained, polyamide resin is preferred. Specifically, a resin comprising PA6 (poly ε-caprolactam, nylon 6 resin), PA66 (polyhexamethylene adipamide), PA69 (polyhexamethylene azelamide), PA610 (polyhexamethylene sebacamide), PA611 (polyhexamethylene undecamide), PA612 (polyhexamethylene dodecamide), PA11 (polyundecane amide), PA12 (polydodecane amide), PA6T (polyhexamethylene terephthalamide), PA9T (polynonamethylene terephthalamide), or polyamide MXD6 (polymetaxylene adipamide) is preferred. Furthermore, from the similar standpoint, resins such as polycarbonate resin (PC resin) and polybutylene terephthalate resin (PBT resin) are also preferred.

The composite constituted by the inorganic fibers and the thermoplastic resin, used in the present invention may contain other components. Specifically, additives such as a flame retardant, a UV-resistant agent, a light stabilizer, an antioxidant, a heat stabilizer, a pigment, a release agent, a softener, a plasticizer and a surfactant that are generally used in a resin shaped product can be exemplified. Particularly, in the present invention, because the composite is partially heated to a temperature of a melting point or glass transition point or higher of the thermoplastic resin that is a matrix component in the step of inserting a metal, the thermoplastic resin is preferably a fiber-reinforced thermoplastic resin previously containing an antioxidant or a heat stabilizer.

The composite constituted by the inorganic fiber and the thermoplastic resin, used in the present invention can be obtained by, for example, forming the thermoplastic resin into a film shape, melting the thermoplastic resin by heating and impregnating a base material composed of long inorganic fibers or short inorganic fibers with the molten resin, or mixing a powdery thermoplastic resin with the base material, followed by heating and melting. In the case where the thermoplastic resin is a powdery thermoplastic resin, it is preferred that its particle diameter is a range of from 50 to 2,000 µm. A method for fixing the thermoplastic resin to a base material constituted by inorganic fibers is preferably a method of pressurizing simultaneously with heating, and a press molding is particularly preferred.

The content of the inorganic fibers in the composite of the present invention is preferably a range of from 10 to 70 wt%, and more preferably a range of from 20 to 60 wt%. Where the content of the base material of reinforcing fibers is too small, reinforcement effect due to fibers is low, and a coefficient of linear expansion of the composite is increased. As a result, there is a tendency that warpage is easy to be generated in the composite and good shaped product is not obtained. Furthermore, there is a tendency that strength is lowered by residual stress. Moreover, thermal conductivity of the composite is not increased, heat is not sufficiently released during molding. Therefore, there is a tendency that a resin shaped product including casted metal capable of withstanding practical use is difficult to be obtained. On the other hand, where the content of fibers is too large, the content of a resin is decreased, there is a tendency that a base material of fibers is difficult to be impregnated with a resin, and good shaped product is not obtained.

The shape of the composite before inserting a metal is preferably a plate shape, and more preferably a thin plate shape. Specifically, its thickness is preferably 25 mm or less. The thickness is more preferably from 1 to 10 mm, and particularly preferably from 2 to 8 mm. In the case where the thickness of the thermoplastic resin composite reinforced with the fibers is too large, there is a tendency that heat generated during metal insert processing remains inside the composite, and thereby deteriorating properties. On the other hand, in the case where the thickness is too small, there is a tendency that warpage is easy to be generated in a shaped product by the heat generated during metal insert processing, and good shaped product is not obtained. The thickness of a portion of the fiber-resin composite being in contact with the metal during metal insert processing is preferably 25 mm or less, more preferably from 1 to 10 mm, and particularly preferably from 2 to 8 mm.

From the purpose for preventing generation of warpage in the composite material and the standpoint of obtaining a shape product having good dimensional accuracy, a coefficient of thermal expansion of the fiber-reinforced resin composite is preferably 15×10⁻⁶/°C or less, more preferably a range of from 0.5×10⁻⁶ to 15×10⁻⁶/°C, and still more preferably a range of from 1×10⁻⁶ to 10×10⁻⁶/°C. Deflection temperature under load of the composite is preferably a range of from 140 to 300°C, and particularly preferably a range of from 150 to 280°C. The deflection temperature under load used herein means a temperature is a temperature obtained by measuring a sample having a thickness of 4 mm under a load applied of 1.8 MPa according to ISO 75.

The composite used in the present invention is easy to release heat by that inorganic fibers are contained. This made it possible to maintain the coefficient of thermal expansion of the composite low as described above. Specifically, the coefficient of thermal expansion of the whole fiber-reinforced composite is preferably 0.5 W/m·K or more, more preferably 1W/m·K or more, and particularly preferably 2W/m·K or more. The upper limit is not particularly limited, but the upper limit is generally about 900W/m·K.

The manufacturing method for a metal insert shaped product of the present invention is a method including laying the composite constituted by inorganic fibers and a thermoplastic resin as described above in a mold, and injecting a metal in a molten state in the composite in the mold to integrate the metal with the composite.

As the metal used in the present invention, its melting point is preferably 800°C or lower, and more preferably a range of from 150°C to 750°C. The embodiment that the present invention is particularly effective is the case that the melting point of the metal is 450°C or higher, and particularly a range of from 550 to 650°C. The present invention has made possible to melt and integrate with a material having high melting point (aluminum and the like) that has not been able to be melted and integrated, by using a composite material having high thermal conductivity, in which inorganic fibers are used as reinforcing fibers.

Examples of the metal used in the present invention specifically include an aluminum alloy, a zinc alloy, a magnesium alloy, a copper alloy, lead, and a tin alloy. Particularly, from the standpoints of mechanical properties and molding castability, an aluminum alloy and a magnesium alloy are particularly preferred.

In the case where the metal to be inserted in those fiber-resin composites is generally molded alone, a die casting method or a thixomolding method is frequently used. The die casting method is a casting method having high productivity in which a mold having high accuracy is prepared by a special steel, the mold is provided with a die casting machine, a metal having relatively low melting point such as an aluminum alloy, a zinc alloy or a magnesium alloy is melted, the metal in a molten state is injected to the mold under high pressure and quickly solidified, and the resulting solid is taken out of the mold. The thixomolding method is a method in which magnesium chips prepared by cutting a magnesium alloy are heated in a cylinder of a molding machine, and the resulting melt is directly injection-molded in a mold without being in contact with the atmosphere.

The mold used in those die casting method and thixomolding method can be diverted and used as the mold for molding in which the composite constituted by fibers and a thermoplastic resin, used in the manufacturing method of the present invention. The metal to be inserted is melted using a die casting machine or a thixomolding machine, and the metal in a molten state is injected in a resin composite in the mold to integrate the metal with the composite. That is, in the case of focusing on a metal portion, the present invention is a method in which a metal is injection-cast in a mold in which a fiber composite has previously been placed, to integrate a fiber-reinforced resin with the metal. Injection speed of the metal is preferably 1 m/sec or more, and more preferably a range of from 2 to 10 m/sec. Filling time of a metal in the mold in which a fiber-resin composite has been previously laid is 5 seconds or less, and particularly preferably a range of from 5 to 500 milliseconds. By conducting the high speed filling, damage to the fiber-resin composite can be effectively decreased.

The temperature of the mold when the metal in a molten state is injected is not particularly limited. However, in the case where the temperature of the mold is higher than the melting temperature of the resin, a shaped product of a fiber-reinforced thermoplastic resin is easy to deform when removing the shaped product from the mold. Therefore, the temperature of the mold is preferably the melting temperature or lower of the resin. On the other hand, where the temperature of the mold is too low, there is a tendency that fluidity of the metal to be injected is rapidly deteriorated and good shaped product is not obtained. Therefore, the temperature of the mold is preferably a range of from 150°C to 300°C, and more preferably lower than the melting temperature of the resin constituting the composite used. The temperature of the mold is particularly preferably lower than a deflection temperature under load of the composite. Furthermore, it is preferred to employ a method in which the mold temperature when injecting a metal and the mold temperature when removing a shaped product from the mold are changed and the temperature is lowered to facilitate the removal of a shaped product. Particularly, in the case of using a composite having low deflection temperature under load (for example, a deflection temperature under load is 150°C or lower), a method is preferable, in which the temperature of the mold is a deflection temperature under load or higher of the resin, and preferably from 150 to 200°C, to injection-cast a low melting point metal, and a shaped product is then removed after the mold temperature is lowered to the deflection temperature under load or lower of the composite, preferably a temperature less than the deflection temperature under load.

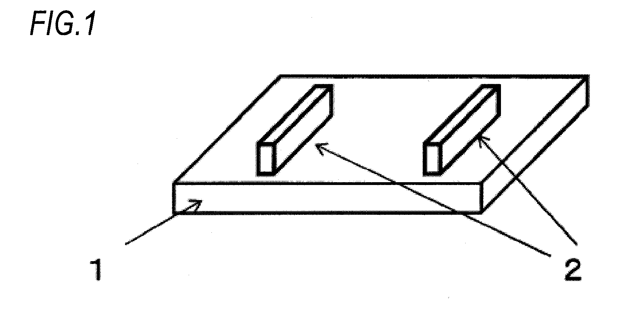

In the present invention, a resin shaped product including casted metal as shown in FIG. 1 can be obtained by laying the composite constituted by inorganic fibers and a thermoplastic resin in a mold, injecting a metal melted by diverting a die casting machine or a thixomolding machine in the mold having the resin composite therein, and integrating the composite of a fiber-reinforced resin with the metal. In general, to integrate a resin with a metal, in view of, for example, the difference in its melting point, a method in which a metal part previously molded is placed in a mold and a molten resin is then poured therein is known. However, in the case of using a thermoplastic resin containing inorganic fibers as in the present invention, a uniform shaped product is difficult to obtain due to poor fluidity of a fiber-resin composite. Furthermore, in the conventional method, when a metal part is previously placed in a mold, stains are easy to attach to the surface of the metal, and there has been a tendency that adhesiveness is decreased. In the present invention, because a metal in a molten state is used, a metal surface when being in contact with a composite is clean. Furthermore, adhesiveness between the composite and the metal is further improved by an anchor effect of reinforcing fibers present on the surface of the composite. Particularly, in the case of using carbon fibers having both heat resistance and reinforcement as the fibers, the effect for improving adhesiveness is remarkable.

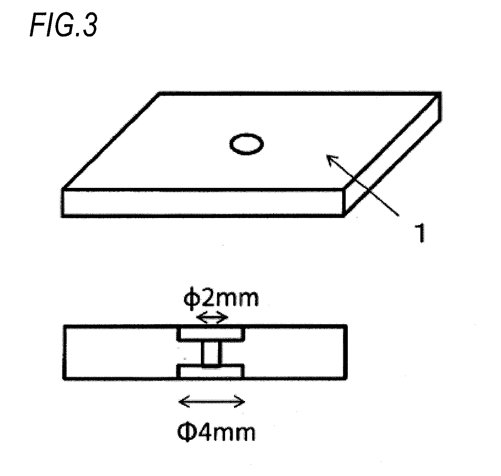

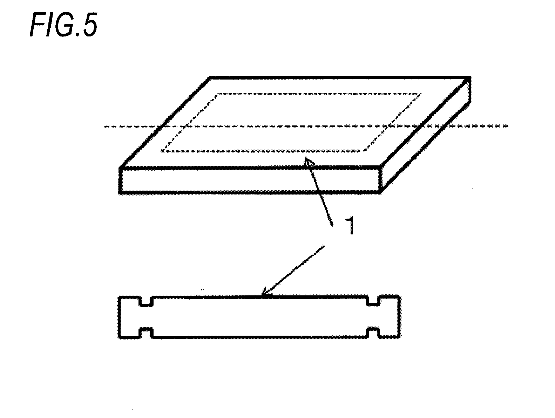

In the method of the present invention, it is preferred that a through-hole or a groove is previously present in the composite at the time of metal insert processing. The composite of a fiber-reinforced resin and the metal can be joined further strongly with each other. Physical anchor effect is generated by a hole penetrating in a thickness direction of the composite to be laid in the mold or a groove having convexoconcave, and joining force is enhanced. Furthermore, it is preferred that difference in level is present in the through-hole of the fiber-reinforced resin composite. By forming a shape having the difference in level as shown in FIG. 3, a structure in which the metal is further mechanically difficult to be come off from the composite is formed. In the case of previously providing a groove on the composite, it is preferred that the groove is a continuous groove over the entire periphery. The groove as shown in FIG. 5 is exemplified as a preferred example. The method for providing a hole penetrating in a thickness direction of the composite or a groove can employ a method in which a composite is previously subjected to machining to provide a hole or a groove, and a method of forming a hole or a groove when injection molding a metal, by utilizing heat and pressure in a mold.

The shape of the metal part in the resin shaped product including casted metal is not particularly limited, but a rib shape having a width and a boss shape that is a projection are preferred. It is preferred that the shape of the boss is a columnar or regular polygonal projection.

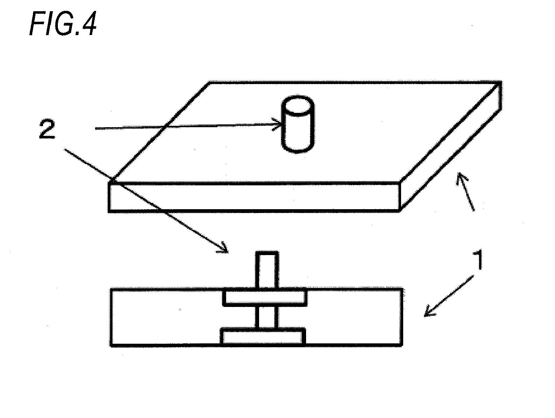

It is preferred that a part of the metal part is exposed from the surface of the composite. It is particularly preferred that the composite has a thin plate-shaped form and the metal part is exposed on both surfaces thereof. In the manufacturing method of the present invention, a metal of high temperature is injected in the composite and molded. By exposing the metal part, heat directly transmits to the mold from the metal part, high temperature state between the metal and the composite (fiber-reinforced resin) is relaxed, and adhesive force is enhanced. Particularly, it is preferred that recessed portions are present on the portion embedded in the composite, and, for example, an exposed surface area to an embedded volume is relatively large as shown in FIG. 4. In addition, it is preferred that a volume of the metal part exposed outside the composite is 1 time or more, and furthermore 2 times of more, the volume of the metal part embedded.

The manufacturing method of the present invention is particularly effective to the case that a metal insert portion in the composite is small, and is a manufacturing method suitable for industrial production having high production efficiency. For example, in a boss-shaped metal part, it is preferred that its diameter is 20 mm or less, and particularly a range of from 1 to 10 mm. In a rib-shaped metal part, it is preferred that its width is 10 mm or less, and particularly a range of from 0.5 to 5 mm. It is preferred that its length is a range of from 20 to 200 mm. A small metal part like this is difficult to previously set in a mold, and manufacturing as a metal insert resin shaped product has been difficult. However, it becomes possible to obtain a high performance shaped product by using the manufacturing method of the present invention.

A metal insert part, which is another present invention, is a product obtained by the above-described manufacturing method of the present invention. In the resin shaped product including casted metal obtained by the manufacturing method of the present invention, a metal and a fiber-reinforced composite are strongly joined without strain, and the resin shaped product including casted metal can be used in wide fields as a part of automobiles, home appliances, industrial equipments and the like.

In the resin shaped product including casted metal of the present invention, a metal part and a fiber-reinforced composite material are integrated, and the resin shaped product including casted metal can be used as parts of various machines, and electric and electronic parts. For example, the metal part is used as an electric terminal, the metal terminal is exposed on both surfaces, and those metal terminals can be used as electric and electronic parts electrically connecting an inner surface and an outer surface of a shaped product. Furthermore, the resin shaped product including casted metal in which a metal part is used in a boss, a tapping screw or the like and a fiber-reinforced resin is used as a main body is a lightweight shaped product although a portion to be repeatedly used is a metal resistant to friction and shock, and is therefore particularly preferred embodiment.

### Examples

Examples are described below, but it should be understood that the present invention is not construed as being limited to those. The deflection temperature under load is a value obtained by the following measurement method.

### <Deflection temperature under load>

According to ISO 75, a sample having an overall length of 80 mm, a width of 10 mm and a thickness of 4 mm was prepared as a sample, a test was carried out under the conditions of span: 64 mm, temperature rising rate: 120°C/h±10°C, and load applied: 1.8 MPa, and a temperature at which a deformation volume of the sample reached 0.34 mm was defined as a "deflection temperature under load".

### Example 1

A carbon fiber fabric ("W-3101" manufactured by Toho Tenax Co., Ltd., fiber areal weight: 200 g/m², thickness: 0.25 mm, plain weave, fibers used: PAN-based carbon fibers, 3,000 filaments, 200 tex, strength: 4,000 MPa, diameter 7.0 µm) was cut into a width of 200 mm and a length of 200 mm, and was prepared as a fiber for constituting a composite and reinforcing a resin.

A polyphenylene sulfide resin (linear PPS resin, "FORTRON W-202A" manufactured by Polyplastics Co., Ltd., melting point: 280°C) as a thermoplastic resin was film-formed by a heat press to prepare a PPS film having a thickness of 100 µm, a width of 200 mm and a length of 200 mm.

One carbon fiber fabric and two PPS films were sequentially set in a flat plate mold having a width of 200 mm and a length of 200 mm so as to be seven carbon fiber fabrics and fourteen PPS films. The temperature of the mold was increased to 320°C, the mold was maintained at 320°C under a surface pressure of 3 MPa for 15 minutes, and the mold was then cooled to 100°C. Thus, a composite of a carbon fiber-reinforced thermoplastic resin in which a PPS resin having a thickness of 2 mm is a matrix resin was obtained. The content of carbon fibers in the composite was 50 wt%. A coefficient of thermal expansion of the composite was 1×10⁻⁶/°C, a thermal conductivity thereof was 4W/m·K, and a deflection temperature under load thereof was 280°C.

The composite constituted by the fibers and the thermoplastic resin thus obtained was cut into a flat plate shape having a width of 100 mm and a length of 100 mm, and was laid in a mold having a rib shape (a mold which forms a rib having a width of 1.5 mm, a height of 5 mm and a length of 90 mm). The temperature of the mold was 180°C. An aluminum alloy was injection cast at 650°C in an injection rate of 2 m/sec using a die casting machine to obtain a resin shaped product including casted metal in which the aluminum alloy was integrated with the composite constituted by the carbon fibers and the thermoplastic resin (FIG. 1). The product obtained had no warpage and was a good product in which the metal was closely adhered to the resin.

### Example 2

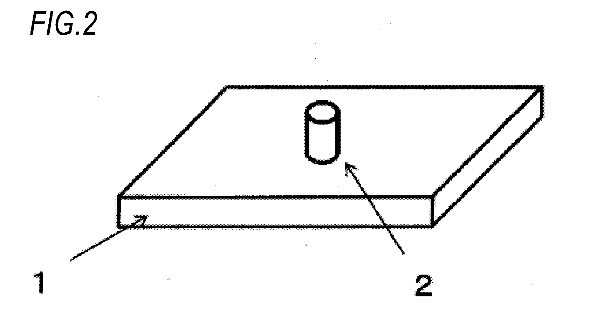

A resin shaped product including casted metal in which the aluminum alloy was integrated with the fiber-resin composite (FIG. 2) was obtained in the same manner as in Example 1, except that a mold for obtaining a product having a boss shape as shown in FIG. 2 (a mold which forms a boss having an inner diameter of 2 mm, an outer diameter of 4 mm and a height of 5 mm) was used in place of the mold for obtaining the product of FIG. 1. The product obtained had no warpage, and was a good product in which the metal was closely adhered to the resin.

### Example 3

A resin shaped product including casted metal in which the aluminum alloy was integrated with a fiber-resin composite (FIG. 4) was obtained in the same manner as in Example 2, except that a plate-shaped sheet in which a through-hole having a difference in level such that one diameter is 2 mm and another diameter is 4 mm (FIG. 3) provided at the center of the composite cut into a width of 100 mm and a length of 100 mm was used in place of the flat sheet-shaped composite of Example 2. The product obtained had no warpage, and was a product in which a boss portion was further strongly joined as compared with Example 2.

### Example 4

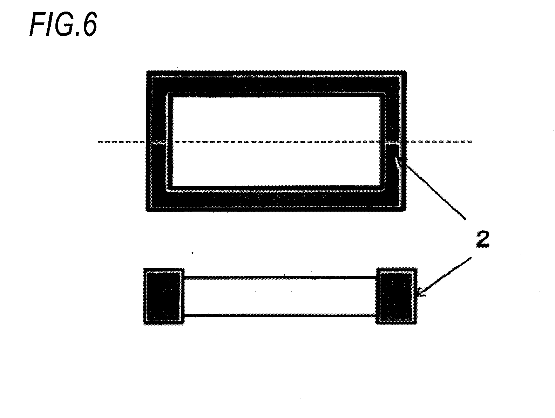

A product in which the aluminum alloy was integrated with an outer periphery of a composite constituted by the fibers and the resin was obtained in the same manner as in Example 1, except that a plate-shaped sheet having a groove having a width of 2 mm and a depth of 0.3 mm provided on an outer periphery of 10 mm from the edge of the composite cut into a width of 100 mm and a length of 100 mm (FIG. 5) was used in place of the flat sheet-shaped composite of Example 1 and a mold for obtaining the product having a shape as in FIG. 6 was used. The product obtained had no warpage and was a product in which the components were strongly joined.

### Example 5

Carbon fibers ("STS40-24K" manufactured by Toho Tenax Co., Ltd., 4,000 MPa, average fiber diameter: 7.0 µm, fiber bundle width: 10 mm) were opened to be a fiber bundle width of 20 mm as fibers for constituting a composite and reinforcing a resin. A rotary cutter having a spiral knife made from cemented carbide arranged on the surface thereof was used as a cutting apparatus, a pitch of blades was 10 mm, and the carbon fibers were cut so as to have a fiber length of 15 mm with the rotary cutter while running the fibers. A double pipe obtained by welding nipples made of SUS304 having different diameters was provided just under the rotary cutter, small holes were formed in an inner pipe, and compressed air was supplied between the inner pipe and an outer pipe using a compressor. Wind velocity from small holes was 420 m/sec. A tapered pipe was welded to the lower part thereof, and a thermoplastic resin as a matrix resin was supplied from a side surface of the tapered pipe.

Particles obtained by freeze-pulverizing a polyphenylene sulfide resin (linear PPS resin, "FORTRON W-202A" manufactured by Polyplastics Co., Ltd., melting point: 280°C) and further classifying with 20 mesh and 100 mesh were used as a thermoplastic resin. An average particle diameter of the PPS powder was about 700 µm.

A table movable in XY direction was provided in the lower part of a taper pipe outlet, and suction was conducted with a blower from the lower part of the table. The amount of the fibers supplied was set to 200 g/min, the amount of the matrix resin supplied was set to 300 g/min, and the apparatus was operated. Thus, a random mat having a fiber areal weight of fibers in which carbon fibers and the PPS resin were mixed of 240 g/m² was obtained. Four random mats obtained were layered, and heated under a pressure of 3 MPa for 3 minutes with a press apparatus heated to 320°C. Thus, a composite constituted by the carbon fibers and the thermoplastic resin, in which the PPS resin having a thickness of 2 mm was a matrix resin, was obtained. The content of the carbon fibers was 40 wt%. A coefficient of thermal expansion of the composite was 5×10⁻⁶/°C, a thermal conductivity thereof was 2 W/m·k, and a deflection temperature under load thereof was 280°C.

A resin shaped product including casted metal in which the aluminum alloy was integrated with the fiber-resin composite (FIG. 4) was obtained in the same manner as in Example 3, except for using the composite obtained above. The product obtained has no warpage and was a product in which the boss portion was strongly joined.

### Example 6

Nylon 6 film having a thickness of 100 µm, a width of 200 mm and a length of 200 mm in which a polyamide resin (nylon 6 resin, "UBE NYLON 1015B PELLET" manufactured by Ube Industries, Ltd., melting point 220°C, deflection temperature under load: 65°C) was used as a thermoplastic resin in place of the polyphenylene sulfide resin of Example 1 was prepared.

The same carbon fiber fabric ("W-3101" manufactured by Toho Tenax Co., Ltd., thickness: 0.25 mm, plain weave, width: 200 mm, length: 200 mm) as in Example 1 was prepared as fibers for reinforcing a resin.

Similar to Example 1, one carbon fiber fabric and two nylon 6 films were sequentially set in a flat plate mold having a width of 200 mm and a length of 200 mm so as to be seven carbon fiber fabrics and fourteen nylon 6 films. The temperature of the mold was increased to 260°C, the mold was maintained at 260°C under a surface pressure of 3 MPa for 15 minutes, and the mold was then cooled to 100°C. Thus, a composite of a carbon fiber-reinforced thermoplastic resin in which nylon 6 resin having a thickness of 2 mm was a matrix resin was obtained. The content of carbon fibers in the composite was 50 wt%. A coefficient of thermal expansion of the composite was 1×10⁻⁶/°C, and a deflection temperature under load thereof was 220°C.

The thus-obtained composite constituted by the fibers and the thermoplastic resin was cut into a width of 100 mm and a length of 100 mm, and a resin shaped product including casted metal in which an aluminum alloy was integrated with the fiber-resin composite (FIG. 4) was obtained using a boss-shaped mold (a mold which forms a boss having a diameter of 3 mm and a height of 5 mm). The product obtained had no warpage, and was a product in which a boss portion was strongly joined.

### Example 7

A resin shaped product including casted metal in which an aluminum alloy was integrated with a fiber-resin composite (FIG. 4) was obtained in the same manner as in Example 6, except that a PBT resin ("DURANEX 500FP PELLET" manufactured by Polyplastics Co., Ltd., melting point: 225°C) was used as a thermoplastic resin in place of the polyamide resin (nylon 6 resin) of Example 6. The product obtained had no wrapage, and was a product in which the boss portion was strongly joined.

### Example 8

A PEI film having a thickness of 100 µm, a width of 200 mm and a length of 200 mm in which a polyether imide resin (PEI resin, "ULTEM 100 PELLET" manufactured by SABIC Innovative Plastics) was used as a thermoplastic resin in place of the polyamide resin (nylon 6) of Example 6 was prepared.

The same carbon fiber fabric ("W-3101" manufactured by Toho Tenax Co., Ltd., thickness: 0.25 mm, plain weave, width: 200 mm, length: 200 mm) as in Example 6 was prepared as fibers for reinforcing a resin.

Similar to Example 6, one carbon fiber fabric and two PEI films were sequentially set in a flat plate mold having a width of 200 mm and a length of 200 mm so as to be seven carbon fiber fabrics and fourteen PEI films. The temperature of the mold was increased to 340°C, the mold was maintained at 340°C under a surface pressure of 3 MPa for 15 minutes, and the mold was then cooled to 150°C. Thus, a composite of a carbon fiber-reinforced thermoplastic resin in which PEI resin having a thickness of 2 mm was a matrix resin was obtained. The content of carbon fibers in the composite was 50 wt%. A coefficient of thermal expansion of the composite was 1×10⁻⁶/°C, and a deflection temperature under load thereof was 210°C.

The thus-obtained composite constituted by the fibers and the thermoplastic resin was cut into a width of 100 mm and a length of 100 mm, and a resin shaped product including casted metal in which an aluminum alloy was integrated with the fiber-resin composite (FIG. 4) was obtained using a boss-shaped mold (a mold which forms a boss having a diameter of 3 mm and a height of 5 mm). The product obtained had no warpage, and was a product in which a boss portion was strongly joined.

### Example 9

A polycarbonate film having a thickness of 100 µm, a width of 200 mm and a length of 200 mm in which a polycarbonate resin (PC resin, "PANLITE 1250L PELLET" manufactured by Teijin Chemicals Ltd.) was used as a thermoplastic resin in place of the polyamide resin (nylon 6) of Example 6 was prepared.

The same carbon fiber fabric ("W-3101" manufactured by Toho Tenax Co., Ltd., thickness: 0.25 mm, plain weave, width: 200 mm, length: 200 mm) as in Example 6 was prepared as fibers for reinforcing a resin.

Similar to Example 6, one carbon fiber fabric and two polycarbonate films were sequentially set in a flat plate mold having a width of 200 mm and a length of 200 mm so as to be seven carbon fiber fabrics and fourteen polycarbonate films. The temperature of the mold was increased to 280°C, the mold was maintained at 280°C under a surface pressure of 3 MPa for 15 minutes, and the mold was then cooled to 100°C. Thus, a composite of a carbon fiber-reinforced thermoplastic resin in which the polycarbonate resin having a thickness of 2 mm was a matrix resin was obtained. The content of carbon fibers in the composite was 50 wt%. A coefficient of thermal expansion of the composite was 1×10⁻⁶/°C, and a deflection temperature under load thereof was 150°C.

The thus-obtained composite constituted by the fibers and the thermoplastic resin was cut into a width of 100 mm and a length of 100 mm, a boss-shaped mold (a mold which forms a boss having a diameter of 3 mm and a height of 5mm) was used, the temperature of the mold was increased to 180°C, an aluminum alloy was injection cast at 650°C using a die casting machine, and the temperature of the mold was then cooled to 130°C. Thus, a resin shaped product including casted metal in which an aluminum alloy was integrated with the fiber-resin composite (FIG. 4) was obtained. The product obtained had not warpage, and was a product in which a boss portion was strongly joined.

### Example 10

A glass fiber fabric ("WF230N100" manufactured by Nitto Boseki Co., Ltd., fiber areal weight: 200 g/m², thickness: 0.22 mm) was prepared as fibers for constituting a composite and reinforcing a resin in place of the carbon fiber fabric of Example 8.

A PEI film having a thickness of 100 µm, a width of 200 mm and a length of 200 mm in which the polyether imide resin (PEI resin, "ULTEM 100 PELLET" manufactured by SABIC Innovative Plastics) used in Example 8 was used as a thermoplastic resin was prepared.

Similar to Example 8, a flat plate mold having a width of 200 mm and a length of 200 mm was used, and one glass fiber fabric and two PEI films were sequentially set so as to be nine glass fiber fabrics and eighteen PEI films. The temperature of the mold was increased to 340°C, the mold was maintained at 340°C under a surface pressure of 3 MPa for 15 minutes, and the mold was then cooled to 150°C. Thus, a composite of a glass fiber-reinforced thermoplastic resin in which PEI resin having a thickness of 2 mm was a matrix resin was obtained. The content of carbon fibers in the composite was 40 wt%.

The thus-obtained composite constituted by the fibers and the thermoplastic resin was cut into a width of 100 mm and a length of 100 mm, and a resin shaped product including casted metal in which an aluminum alloy was integrated with the fiber-resin composite (FIG. 4) was obtained using a boss-shaped mold (a mold which forms a boss having a diameter of 3 mm and a height of 5 mm). The product obtained was that warpage is slightly observed, but was a product in the level that sufficiently withstands practical use.

### Comparative Example 1

A sheet constituted by nylon 6 resin (a coefficient of thermal expansion is 80×10⁻⁶/°C, a thermal conductivity is 0.2W/m·k, and a deflection temperature under load is 65°C) was prepared in the same manner as in Example 6, except that fibers for reinforcing a resin were not used, and a fiber-free resin shaped product including casted metal in which an aluminum alloy was integrated with the resin sheet (FIG. 4) was obtained in the same manner as in Example 6, except that the sheet was used in place of the composite. The product obtained included many warpages and fine spaces between the metal and the resin, and was a product that does not withstand the practical use.

## Claims

1. A manufacturing method for a resin shaped product including casted metal, comprising:
laying a composite comprising an inorganic fiber and a thermoplastic resin in a mold for molding; and
injecting a metal in a molten state into the mold to integrate the metal with the composite.

2. The manufacturing method for a resin shaped product including casted metal according to claim 1,
wherein the inorganic fiber is a carbon fiber.

3. The manufacturing method for a resin shaped product including casted metal according to claim 1 or 2,
wherein the metal is an aluminum alloy or a magnesium alloy.

4. The manufacturing method for a resin shaped product including casted metal according to any one of claims 1 to 3,
wherein a content of the inorganic fiber in the composite is from 10 to 70 wt%.

5. The manufacturing method for a resin shaped product including casted metal according to any one of claims 1 to 4,
wherein a thickness of a portion of the composite to be contact with the metal is 25 mm or less.

6. The manufacturing method for a resin shaped product including casted metal according to any one of claims 1 to 5,
wherein a through-hole, a non-through-hole or a groove is previously present in the composite.

7. The manufacturing method for a resin shaped product including casted metal according to any one of claims 1 to 6,
wherein a metal portion in the resin shaped product including casted metal has a shape of a rib or a boss.

8. A resin shaped product including casted metal obtained by the manufacturing method according to any one of claims 1 to 7.
